# EUROPEAN PATENT SPECIFICATION

(11) **EP 3 410 705 B1**
(45) Date of publication and mention of the grant of the patent: **03.11.2021**
(21) Application number: 17174278.6
(22) Date of filing: 02.06.2017
(51) Int. Cl.: H04N 13/246, H04N 13/122, H04N 13/239, G06T 7/80

(54) **3D VISION SYSTEM FOR A MOTOR VEHICLE AND METHOD OF CONTROLLING A 3D VISION SYSTEM**
3D SICHTSYSTEM FÜR EIN KRAFTFAHRZEUG UND VERFAHREN ZUR STEUERUNG EINES 3D SICHTSYSTEMS
SYSTÈME DE VISION 3D POUR UN VÉHICULE AUTOMOBILE ET PROCÉDÉ DE COMMANDE DUDIT SYSTÈME

(43) Date of publication of application: 05.12.2018
(73) Proprietor: Veoneer Sweden AB, 447 83 Vårgårda (SE)
(72) Inventor: Lindgren, Leif, 58336 Linköping (SE)
(74) Representative: Müller Verweyen

(56) References cited:
- EP-A1- 3 176 750
- DE-A1-102008 008 619
- JP-A- 2016 008 847
- US-A1- 2013 016 186
- US-A1- 2014 009 577
- Anonymous: "Optical flow", Wikipedia, the free encyclopedia, 25 July 2009 (2009-07-25), XP055282745, Retrieved from the Internet: URL:http://web.archive.org/web/20090725161 839/http://en.wikipedia.org/wiki/Optical_f low [retrieved on 2016-06-22]

## Description

The invention relates to a vision system for a motor vehicle, comprising a pair of imaging devices forming a stereo imaging apparatus, a housing part to which said imaging devices are mounted, and a data processing apparatus adapted to perform rectification of images captured by said stereo imaging apparatus, stereo matching of rectified images, and to detect an object in the surrounding of the motor vehicle from stereo matched images. The invention also relates to a method of controlling a vision system.

To accurately calculate a disparity/depth image from a stereo camera one must first resample, or warp/rectify, the two camera images so they are aligned. This makes any object in space appear at the same row in both the left and the right warped images. The disparity calculation then becomes a one dimensional horizontal search along the columns of the image. The larger the horizontal disparity between left and right image, the closer the object is to the camera.

Traditional stereo camera calibration estimates lens distortion and focal length for each camera module and then the yaw, pitch, and roll angles between the cameras. However, this type of calibration does not solve the entire calibration problem. Things like windshield distortion, i.e. how the windshield bends the light, and tilt between lens optical axis and image sensor plane are not handled by the traditional calibration.

Due to the non-perfect manufacturing process of windshields, each windshield is different. For example, the thickness varies over the windshield, which makes each windshield to bend the light differently. Therefore, a compensation model derived just from optical simulations of a perfect windshield does not solve the entire problem with windshield distortion for stereo cameras in vehicles.

DE 10 2008 008 619 A1, US 2017/0201736 A1 and US 2013/016186

A1 disclose stereoscopic vision systems for a motor vehicle with correction of vertical displacement between stereo images.

US 2014/0009577 A1 disclose a further vision system suited for a motor vehicle.

The object of the present invention is to provide a vision system and method which allow for an accurate determination of a vertical mismatch between the stereo cameras during operation of a motor vehicle.

The invention solves this object with the features of the independent claims. According to the invention, vertical shift information is calculated from which vertical shifts between parts of an image from one imaging device to corresponding parts of an image of the other imaging device are derivable, and a vertical mismatch of one or more, or between, the imaging devices is calculated from the vertical shift information.

The invention has realized that there is no need to model and estimate the exact vertical mismatch, like windshield distortion, for the left and right camera in a stereo camera in a vehicle. To calculate stereo disparity it is most important to estimate and compensate for the difference between the windshield distortion for the left and the right cameras. This is because for stereo matching the most important point is the difference between the left and right images, as regards windshield distortion and other vertical mismatches. If the windshield distortion was exactly the same for the left and right camera then the problem would be much smaller.

Horizontal displacement differences between the right and left camera will turn up as a distance estimation error in the disparity map, which is less serious. Vertical displacement differences between the right and left camera will cause the one dimensional search in the stereo matching to try to match incorrect regions. This can have a huge impact on the resulting disparity image. For example, at near horizontal slanted lines painted on the road, a vertical mismatch between the left and right warped images can cause a very large disparity error which can cause the flat painted lines to look like obstacles sticking up out of the ground. From the above it follows that the compensation for vertical windshield distortion according to the invention is much more important than compensation for horizontal windshield distortion.

The invention works online and estimates and/or compensates the vertical mismatch in the rectified or warped images. The vertical mismatches can come from, for example, focal length estimation errors, windshield distortion, and/or tilt between lens optical axis and image sensor plane. The result can then preferably be used for modifying the warping calculation to reduce the vertical mismatch in the warped images, resulting in better disparity images in a stereo camera. The invention can take advantage of data from existing calibration algorithms that estimate pitch angle and/or roll angle errors, making it cost-effective to implement.

The invention solves the most important parts of the windshield distortion problem. Additionally or alternatively, it preferably also solves other effects that cause a vertical mismatch between the left and right stereo camera images, in particular, the vertical mismatch coming from a tilt of the optical axis of at least one imaging device relative to the image sensor. In addition to windshield distortion and/or the optical axis tilt(s), preferably also a focal length difference or drift between the imaging devices is calculated from the vertical shift information.

The invention uses a novel calibration algorithm suited for estimating a pitch angle error and/or a roll angle error. Herein, for image elements of a rectified image from one imaging device, a search for a best-matching image element is performed in the corresponding rectified image from the other imaging device, where the search covers a two-dimensional search area. The search yields vertical shift information from which a vertical shift from the image element to the best-matching image element is derivable. The windshield distortion and/or the optical axis tilt(s) can be easily calculated on the basis of, i.e. directly or indirectly from, such vertical shift information. In this embodiment, there is no need to find any distinctive feature points in the images, and the determination of the windshield caused distortion and/or the optical axis tilt(s) is possible under all conditions in the inspected car environment. Since the calculations are performed on rectified images, it is the windshield distortion and/or the optical axis tilt(s) used in the stereo matching or rectification which is calculated.

Preferably the vertical shift information comprises a plurality of match related scores indicating the degree of vertical match between the image element under consideration and a plurality of image elements of the corresponding image from the other imaging device shifted with different vertical components relative to the image element under consideration, yielding a vertical matching cost cube. Specifically, when a one-dimensional horizontal search engine is used, each one-dimensional horizontal search calculates a horizontal match or cost tuple, with one match or cost value for each horizontal position in the one-dimensional horizontal search. The lowest match or cost value in each horizontal match or cost tuple is extracted, yielding the vertical matching cost cube containing one match or cost value for each horizontal search performed. Such a vertical match score cube contains all information of an image required to calculate the vertical windshield distortion component and/or the optical axis tilt(s) affecting the stereo matching.

Preferably pluralities of image elements are bundled into larger image regions and for each vertical shift the cost values, or match related scores, from each image element in that image region are summed up or accumulated, yielding a reduced size matching cost cube. This approach has the advantage of much lower data amounts as compared to the large vertical matching cost cube, while still enabling a high and sufficient precision regarding the calculation of the windscreen distortion and/or the optical axis tilt(s). In other words, match scores or cost values from many pixels can be combined into image regions to save memory bandwidth, memory size, and processing requirements.

Preferably the vertical shift giving the best match for each image region is determined from the reduced cost cube, yielding a vertical shift map. From such a shift map, preferably the pitch and/or roll angel errors is calculated. This enables to calculate a residual shift map from the vertical shift map by subtracting contributions of a pitch angle error and/or a roll angle error from said shift map. From such residual shift map the vertical mismatch comprising for example the windshield distortion, as well as other contributions like focal length difference or tilt of the optical axis of one or more imaging device, can be easily calculated. For example, the vertical component of windshield distortion can preferably be estimated from a contribution to the shift map or to the residual shift map in the lower left corner and the lower right corner pointing in opposite direction, the size of which increasing towards the corner. A focal length difference or drift can be estimated from a contribution to the residual shift map pointing in opposite directions on the top and on the bottom, and increasing from the center to the top and to the bottom. Alternatively, the vertical mismatch can be computed from the residual shift map as a whole using a minimization function.

It is also possible to calculate the vertical mismatch directly from the vertical match score cube or from the reduced cost cube, without the use of a shift map.

In a preferred embodiment, the search is performed using a one-dimensional horizontal search engine and performing a plurality of one-dimensional horizontal searches shifted by different amounts relative to each other in the vertical direction. In other words, an existing one-dimensional stereo matching hardware or software engine can simply be re-used, e.g. by time sharing it with the standard stereo calculations done in the vision system. For example, the search can be performed in idle time slots of, and/or in alternating time slots with, the horizontal stereo matching process.

In another embodiment, a fully two-dimensional search engine can be used for performing the horizontal stereo matching process and the search simultaneously. Particularly suited are two-dimensional search engines used in optical flow calculations, since the mathematical problem underlying both tasks is essentially the same. Such a two-dimensional search engine yields vertical shift information in the form of a vector from each image element under consideration to the best matching image element in the corresponding image from the other imaging device. A vertical shift map can easily be derived from these vectors by simply taking the vertical components of the vectors.

To have a stable and accurate result, the shift map or the residual shift map can be filtered using suited signal processing algorithms. It is also possible to combine several shift maps before estimating the pitch and/or roll angles, in order to improve the statistics and thereby the accuracy. For the same reason, it is possible to combine several matching score cubes, or cost cubes, before performing further processing based on the matching score cubes, or cost cubes, in particular before calculation of a shift map.

A search engine may be a software engine or a dedicated search hardware. In particular, a one-dimensional search engine may be formed by a horizontal stereo matching hardware block.

An image element according to the invention can be a pixel, i.e. the smallest possible image element or picture element, or an image area composed of a plurality of pixels, for example a rectangular area of p x q pixels, where p and q are integers larger than one.

In an alternative embodiment the vertical mismatch can be calculated from distinctive feature points detected in the images of both imaging devices, instead of using shift maps as described above. Finding feature points in the left and right images and matching them is a common method to do stereo camera calibration and estimating pitch, roll and yaw angles between the cameras. For example, a conventional method for estimating pitch and roll angles which is known as 5-point method or feature point method involves finding for example five distinctive points, called feature points, in a left and right image pair, and estimating the pitch and roll angle errors from these feature points. This method involves the finding of feature points in both images and can be used according to the invention also for calculating the vertical mismatch. The vertical mismatch of the feature points forms the vertical shift information of the invention. Feature points may in particular be characteristic points of static objects in the environment of the motor vehicle, like traffic lights, traffic signs, poles, trees and the like, but also the vanishing point, end points of road markings etc.

In the feature point method it is also possible to calculate the residual vertical mismatch between the feature points after pitch and roll angles have been estimated and compensated for. These feature point vertical mismatches for the vertical shift can then be filtered over time, and when taking their image position into account it is possible to estimate 2D maps similar to the above described shift maps. It is also possible to use the vertical mismatch between the feature points directly instead of using the residual after the pitch and roll angles have been calculated and compensated for.

Preferably the calculated errors, in particular the calculated vertical mismatch, are used in later stereo matching processes. In other words, any mismatch of the imaging devices in particular, due for example to windshield distortion, optical axis tilt(s) and/or focal length difference, can be compensated for automatically and continuously during driving.

In the following the invention shall be illustrated on the basis of preferred embodiments with reference to the accompanying drawings, wherein the Figures show:

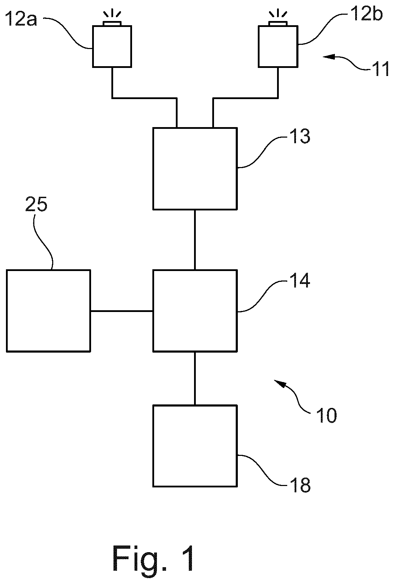

- Fig. 1: a schematic drawing of a stereo vision system in a motor vehicle;
- Fig. 2A, 2B: the vertical and horizontal displacement, respectively, in pixels on the image sensor plane for one of the imaging devices;
- Fig. 3A-3C: the vertical displacement from the windshield of the left and right imaging devices, respectively, as well as in Figure 3C the difference between Figures 3A and 3B;
- Fig. 4: horizontal stereo matching and vertical matching for a left / right image pair;
- Fig. 5: the calculation of a shift map from a cost cube in a schematic manner;
- Figs. 6-8: a vertical shift map, a time-averaged residual shift map and an additionally spatially filtered residual shift map, respectively; and
- Figs. 9-13: contributions to the (residual) shift map from a pitch angle error, a roll angle error, a focal length drift, a windshield distortion, and an optical axis tilt, respectively;
- Fig. 14: shows a perspective view of a camera housing part for the stereo imaging apparatus; and
- Fig. 15: shows a rear view of the camera housing part of Figure 14.

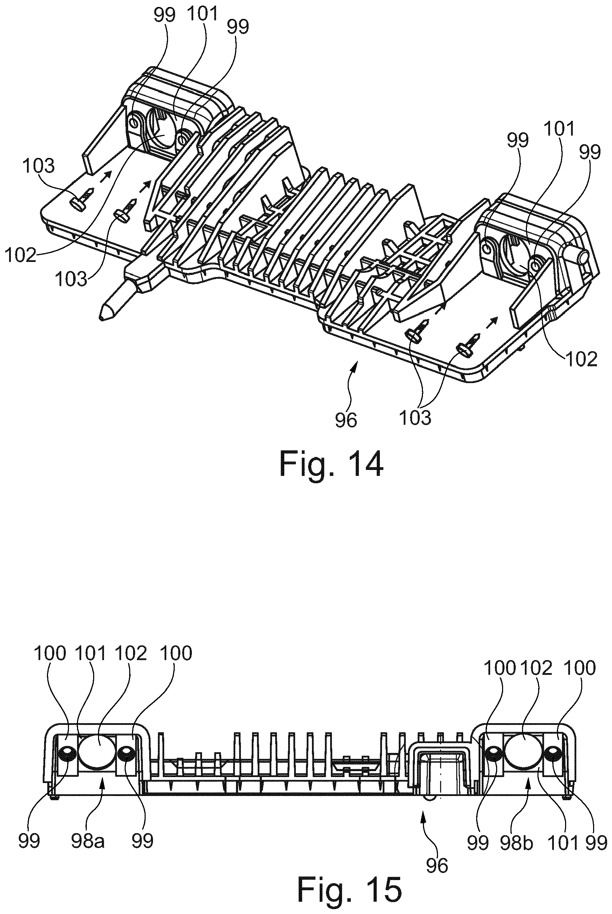

The vision system 10 is mounted in a motor vehicle and comprises an imaging apparatus 11 for capturing images of a region surrounding the motor vehicle, for example a region in front of the motor vehicle. The imaging apparatus 11 comprises a camera housing part 96, see Figures 14 and 15, and a plurality of optical imaging devices 12a, 12b mounted in the camera housing part 96 and forming a stereo imaging apparatus 11. Preferably the imaging devices 12 are cameras, operating in the visible and/or infrared wavelength range, where infrared covers near IR with wavelengths below 5 microns and/or far IR with wavelengths beyond 5 microns. The camera housing part 96 comprises one or more receptacles 98 each adapted to receive a camera module 12, and may be mounted behind a front windshield of a motor vehicle in the region of the rear mirror.

The imaging apparatus 11 is coupled to an image pre-processor 13 adapted to control the capture of images by the imaging apparatus 11, receive the electrical signal containing the image information from the imaging apparatus 11, rectify or warp pairs of left/ right images into alignment and/or create disparity or depth images, which per se is known in the art. The pre-processor 13 in particular comprises, or forms, the disparity calculation block 13 adapted to calculate the stereo disparity of left/right images captured by the imaging apparatus 11. The image pre-processor 13 may be realized by a dedicated hardware circuit, for example a Field Programmable Gate Array (FPGA) or an Application Specific Integrated Circuit (ASIC). Alternatively the pre-processor 13, or part of its functions, can be realized in the electronic processing device 14 or a System-On-Chip (SoC) device comprising, for example, FPGA, processing device, ARM and/or microprocessor functionality.

The pre-processed image data is then provided to an electronic processing device 14 where further image and data processing is carried out by corresponding software. The image and data processing in the processing device 14 may for example comprise identifying and preferably also classifying possible objects in front of the motor vehicle, such as pedestrians, other vehicles, bicyclists and/or large animals, tracking over time the position of object candidates identified in the captured images, and activating or controlling at least one driver assistance device 18 depending on an estimation performed with respect to a tracked object, for example an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 14 is preferably a digital device which is programmed or programmable and preferably comprises a microprocessor, micro-controller, digital signal processor (processing device) or a System-On-Chip (SoC) device, and preferably has access to, or comprises, a memory device 25. The data processing device 14, pre-processing device 13 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image pre-processing, image processing to possible activation or control of driver assistance device 18 are performed automatically and continuously during driving in real time.

In the following, the vertical image distortion caused by the vehicle windshield is first explained in general.

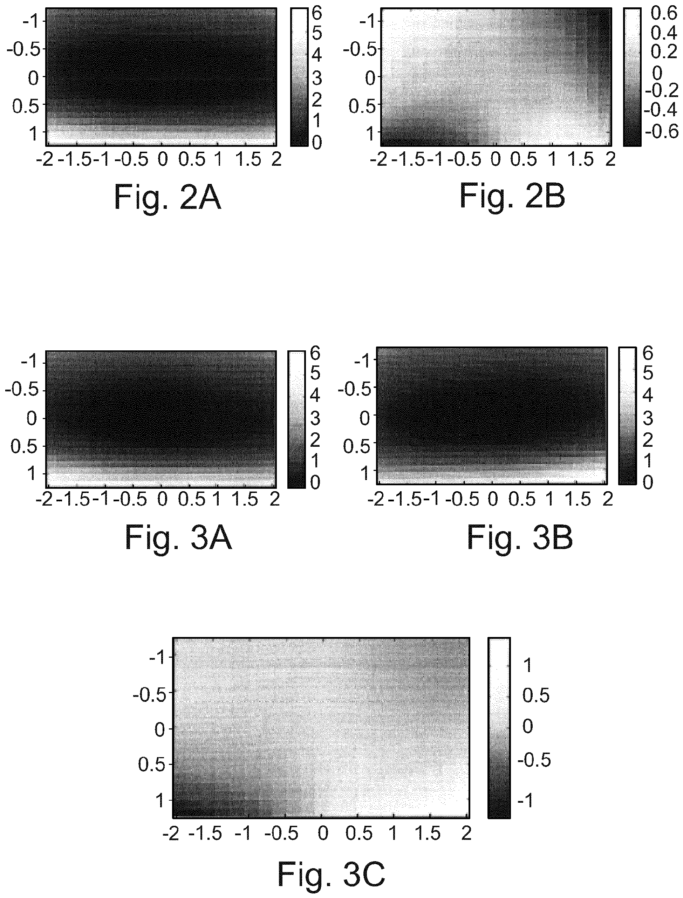

A vehicle windshield is made from several layers of glass, and is curved both horizontally and vertically. Due to its shape, an ideally manufactured windshield bends the light more in the vertical direction than in the horizontal direction. This can be seen in Figures 2A and 2B, which are two dimensional plots of the image sensor in one of the cameras, for example the left camera, with displacement caused by the windshield greyscale coded. More specifically, the x-axis of Figures 2A, 2B shows the real horizontal position in mm; the y-axis shows the real vertical position in mm; and the grayscale value of each pixel gives the vertical or Y displacement (Figure 2A) and the horizontal or X displacement (Figure 2B), where a dark value indicates a large displacement. The vertical displacement (Figure 2A) is highest in the bottom left corner for the left camera; for this particular windshield and camera combination it is six pixels in the corner. The horizontal displacement is highest in the corners, around 0.7 pixels in this particular case.

Figures 3A to 3C compare the vertical displacement introduced by a perfectly manufactured windshield in left versus right images. In Figures 3A to 3C, the x-axis shows the real horizontal position in mm; the y-axis shows the real vertical position in mm; and the grayscale value of each pixel gives the vertical or Y displacement for the left imaging device 12a (Figure 3A) and for the right imaging device 12b (Figure 3B) as well as the right minus left difference of the Y displacement (Figure 3C), where again a dark value indicates a large distortion. It is evident from Figure 3C that the vertical component of windshield distortion provides a large contribution to the right minus left difference of the Y displacement in the lower left corner and the lower right corner pointing in opposite direction, with increasing size towards the respective corner.

In the following, the inventive calculation of the vertical windshield distortion between the imaging devices 12a, 12b during driving is explained by way of example. The following procedure takes place in the data processing apparatus 14, preferably in the pre-processing section 13 thereof.

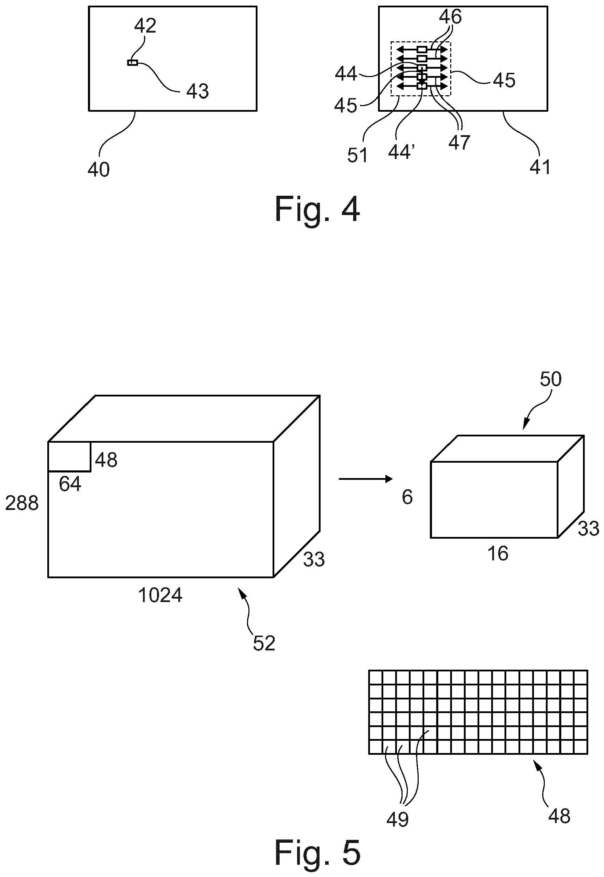

Figure 4 shows an image 40 taken with the left camera 12a and an image 41 taken with the right camera 12b. First of all, as mentioned above, a rectification step is provided where the left / rights images are rectified, or warped, relative to each other in order to bring them into alignment.

After the rectification step, a horizontal stereo matching step is performed on the rectified left / right images. This step comprises finding the best horizontal match for each pixel of the left / right images, and calculating a disparity value for each pixel, resulting in a disparity image comprising depth information. Specifically, in the step of finding the best horizontal match for each pixel of the left / right images, typically for each pixel 42 in one image a small image part 43 around this pixel is taken and a one-dimensional horizontal search 45 is made for the corresponding small image part 44 in the other image using a cost function, for example the sum of absolute differences or the sum of squared differences.

The method illustrated in Figure 4 comprises a step of finding the best vertical match for pixels, or regions of pixels, of the rectified left / right images. This step can be performed on a whole rectified image, or, in order to save processing resources, only on one or more smaller parts of a rectified image, for example every nth line of an image, or every nth group of m lines, where n and m are integers larger 1, for example n=2 and m=64. Furthermore, this step can be performed for every pixel of the rectified image or rectified image part(s) considered, or a subset of all pixels, for example every nth pixel, where n is an integer larger 1, for example n=2.

In the step of finding the best vertical match, typically for each pixel 42 in one image 40 a small image part 43 around this pixel is taken and a search is made for the corresponding small image part 44 in a two-dimensional search region 51 in the other image 41 using a cost function, for example the sum of absolute differences or the sum of squared differences.

In the present embodiment, the search is performed by repeating a one-dimensional horizontal search 45, 46, 47 many times, where each horizontal search is shifted vertically around the search 45 by different amounts and both up and down. In Figure 4, for example two horizontal searches 46 shifted vertically up and two horizontal searches 47 shifted vertically down with respect to the horizontal search 45 are performed, leading to five horizontal searches. It should be understood that the number of horizontal searches 45-47 is preferably higher than five, preferably at least 10, more preferably at least 20, even more preferably at least 30, for example 16 + 1 + 16 = 33.

The preferably equidistant vertical shift of the horizontal searches 45, 46, 47 relative to each other may be a shift by one or more pixels, or preferably a sub-pixel shift, i.e. a shift by fraction of a pixel which is performed by image processing techniques. Vertical sub-pixel shifts provide a higher precision in the determination of the pitch and/or roll angle error than shifts by one or more pixels. The vertical shift is performed on one of the two images 40, 41 by a new rectification or by re-sampling.

Each one-dimensional horizontal 45, 46, 47 search calculates a horizontal match or cost tuple, with one match or cost value for each horizontal position in the one-dimensional horizontal search. The lowest match or cost value in each horizontal match or cost tuple is then extracted, yielding the vertical matching cost cube containing one match or cost value for each horizontal search performed. More generally, the cost function used in the two-dimensional search yields an individual cost value for each horizontal search performed for each individual pixel 43 considered. Therefore, the number of individual cost values for each pixel considered is equal to the number of horizontal searches performed for that pixel, e.g. 33 in the above mentioned example. The cost values here form the match score; the smaller the cost value, the better the match. Other types of match scores are possible, including match values where the higher the match value, the better the match.

The above mentioned embodiment of executing the effectively two-dimensional search via a plurality of vertically shifted one-dimensional horizontal searches has the advantage that a usual one-dimensional matching engine or hardware for performing the best horizontal match is also used for finding the best vertical match. Therefore, no new or adapted engine or hardware is needed. The horizontal matching engine or hardware can be re-used for finding the best vertical match via time sharing. For example, in alternating time slots A - B - A - B - ..., horizontal stereo matching (time slots A) and vertically shifted horizontal searches (time slots B) are performed non-simultaneously. As a result, a two-dimensional search is performed using a one-dimensional matching hardware, by running through a stereo matching hardware block several times with different horizontal and vertical shifts on one image.

The set of extracted (vertical) cost values builds up a (vertical) cost cube 52, see Figure 5. The front of the cost cube 52 in Figure 5 here has the size of the images 40, 41, while the third dimension is formed by the vertical cost values for the vertical shifts performed. The numbers given in Figure 3 purely by way of example relate to images with 1024 px x 288 px and 33 vertical cost values calculated for each pixel as mentioned above. Therefore, the cost cube 52 is thirty three units deep and comprises nearly 10^7 cost values.

By way of example, the image element 44' in Figure 4 may have the lowest cost value, or the best vertical match, with the image element 43 of the other image. The arrow from the central image element 44 to the image element 44' providing the best vertical match is the vertical shift 45 of the image element 44'. A 1024 x 288 vertical shift map could be extracted from the large cost cube 52 by identifying, for each pixel in the cost cube, the lowest of the 33 corresponding cost values. However, such a large shift map would be computationally very expensive.

In order to make the invention computationally more affordable, a reduced cost cube 50 shown on the right in Figure 5 is preferably calculated from the large cost cube 52. This is done by bundling pluralities of image elements or pixels into larger image regions of n x m pixels, where n and m are integers larger one, preferably at least five, more preferably at least ten. The number of image regions considered is preferably at least ten, and/or preferably by a factor of at least ten, more preferably by a factor of at least hundred smaller than the total number of pixels in the image. In a practical embodiment, a full 1024 px x 288 px image could be bundled into regions of 64 px x 48 px as shown in Figure 5, leading to 16 x 6 = 96 image regions. For each image region a bundled match score tuple (here comprising 33 vertical shift cost values), or bundled cost tuple, is calculated for example as the sum, or average, of the n x m cost tuples (e.g. 64 x 48) of the large cost cube 52 belonging to the image region under consideration. This results in a reduced cost cube 50 of much smaller size, having for example 16 x 6 x 33 = 3168 (bundled) cost values.

A large advantage of the smaller cost cube 50 is the strongly reduced amount of data that needs to be buffered. Each horizontal plane in the cost cube, corresponding to one vertical shift, can be calculated at a time. Therefore, instead of having to store 1024 x 288 cost values for each vertical shift in the case of the large cost cube 52, in this embodiment only 16 x 6 cost values have to be stored for each vertical shift in the case of the small cost cube 50, which is a reduction by a factor of more than 3000.

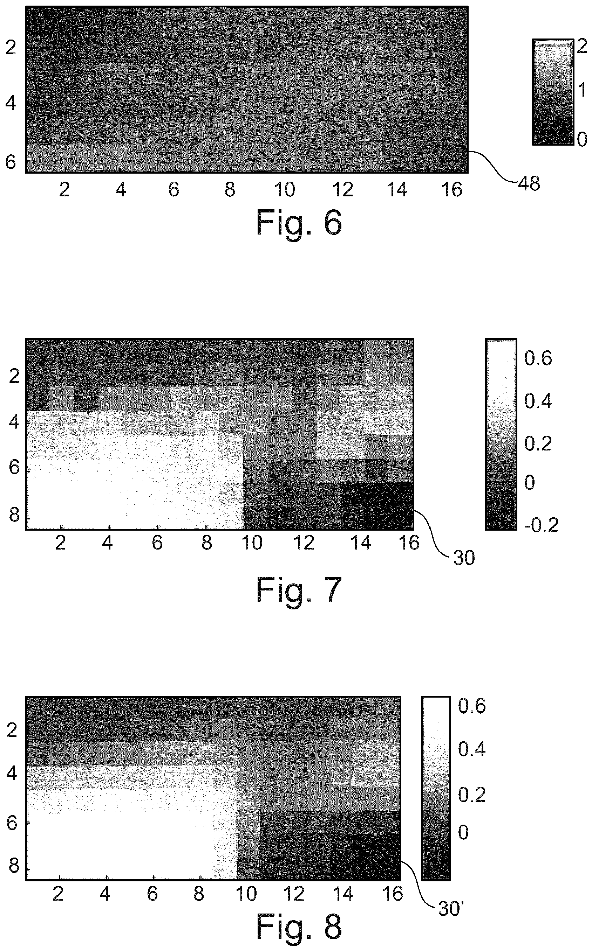

From the reduced cost cube 50, a shift map 48 is preferably calculated. For each image element 49 in the reduced cost cube 50, the best match score, or lowest cost value, of the corresponding cost tuple (here out of the 33 corresponding cost values) is determined. This best match score, or lowest cost value, is equivalent to a particular vertical shift which gives the best match between the image region in the left / right images. The vertical shift of each element 49 yields a two-dimensional shift map 48, composed of for example 16 x 6 image regions 49. Therefore, the shift map 48 is a two-dimensional map where the vertical shift giving the best match is assigned to each element 49 of the shift map 48. A practical example of such a shift map 48 is shown in Figure 6.

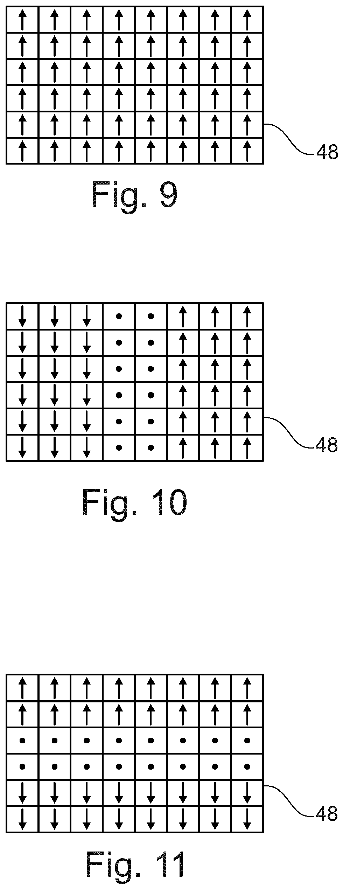

From the shift map 48, first the pitch angle error and the roll angle error can be calculated. For example, a pitch error can be estimated from a contribution to the shift map pointing in the same direction, here upwards, and having the same size, see Figure 9. A roll error can be estimated from a contribution to the shift map pointing in opposite directions on the right and on the left, and increasing from the center to the left and to the right, see Figure 10. In reality, linear combinations of the above described pure patterns are likely to arise in the shift map 48. It is possible to extract the contributions from the pitch angle error and the roll angle error from the shift map 48 using suited processing techniques. For details about the calculation of the pitch and roll errors from the shift map 48 reference is made to European patent application no. 15198019.

From the shift map 48 a residual shift map 30 can be calculated by subtracting at least the contributions of the pitch error and/or the roll error from the shift map 48. The residual shift map 30 calculated from the shift map 48 of Figure 6 is shown in Figure 7. More particularly, Figure 7 shows a time averaged shift map, here a 16 x 8 residual shift map averaged over for example 5 minutes of driving. A time-averaged shift map 30 was calculated roughly every three seconds, which means the data of around 100 single shift maps were used for time-averaging.

Furthermore, conventional signal processing can be applied to get good and stable estimations. This can include, but is not limited to, e.g. time filtering, spatial filtering, and/or spatial interpolation. For example, Figure 8 shows a spatially filtered version 30' of the shift map 30 shown in Figure 7.

The residual shift map 30, 30' holds the vertical mismatch coming from other errors than pitch and roll angle errors, which can be extracted from the residual shift map 30, 30' using suited data processing algorithms. These other errors can be, e.g., errors in focal length, or focal length drift, between left and right camera, the vertical component of distortion introduced by the windshield, and/or the vertical component from non-perpendicular optical axis versus image sensor plane.

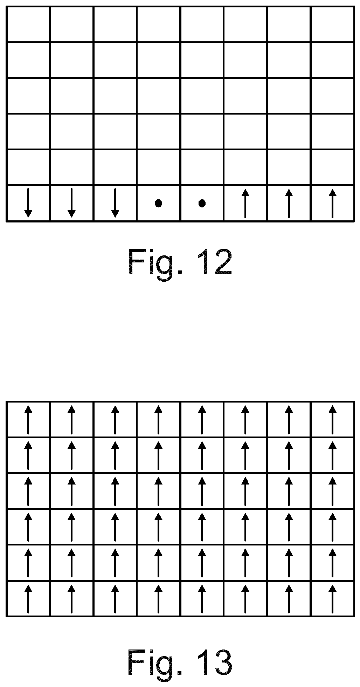

For example, a focal length difference or focal length drift between both imaging devices 12 can be calculated from a contribution to the (residual) shift map pointing in opposite directions on the top and on the bottom, and increasing from the center to the top and to the bottom, see Figure 11. The vertical component of windshield distortion can be estimated from a contribution to the (residual) shift map in the lower left corner and the lower right corner pointing in opposite direction, the size of which increasing towards the corner, see Figure 12. At tilt of one or more of the optical axes can also be estimated from the (residual) shift map. For example, a purely vertical tilt (around a horizontal axis in the image sensor plane) gives a contribution to the residual shift map strongest on the top and bottom lines of the image, decreasing towards the center lines, all pointing in the same direction, see Figure 13.

In an alternative embodiment the other errors, in particular the windshield distortion, can be calculated from shift map 48 directly. In this embodiment, the calculation of a residual shift map 30, 30' may not be necessary.

Preferably the calculated errors, in particular the windshield distortion, are fed back into the pre-processing section 13 in order to allow compensation for these errors in the following rectification and/or stereo matching.

With respect to Figures 14 and 15, each receptacle 98 of the camera housing part 96 preferably comprises a mounting wall 101. In each mounting wall 101 bores 99 can be formed which are adapted to fittingly receive a pin (not shown) of a camera module 12 to be inserted into the receptacle 98. The bores 99 are preferably through-holes through which screws 103 can be screwed from the front side of the wall 101. In each mounting wall 101, preferably an opening 102 is formed through which light can pass into the respective camera module 12. Each mounting wall 101 preferably comprises at least one contact surface 100 designed to provide an abutment for a corresponding surface of the camera module 12.

## Claims

1. A vision system (10) for a motor vehicle, comprising a pair of imaging devices (12a, 12b) forming a stereo imaging apparatus (11), a housing part (96) to which said imaging devices (12a, 12b) are mounted, and a data processing apparatus (14) adapted to perform rectification of images captured by said stereo imaging apparatus (11), stereo matching of rectified images, and detection of an object in the surrounding of the motor vehicle from stereo matched images,
wherein said data processing device (14) is adapted
to perform, for image elements (43) of a rectified image from one imaging device, a search for a best-matching image element (44') in the corresponding rectified image from the other imaging device, said search covering a two-dimensional search area, said search yielding said vertical shift information from which a vertical shift from the image element (43) to the best-matching image element (44') is derivable, to calculate from said vertical shift information a vertical mismatch of one or more, or between, the imaging devices (12a, 12b),
wherein said vertical mismatch comes from one or more of
- a vertical windshield distortion between the imaging devices (12a, 12b);
- a tilt of the optical axis of one or more of said imaging devices (12a, 12b) with respect to the image sensor plane;
- a focal length difference or drift between the imaging devices (12a, 12b), and to calculate a vertical shift map (48) comprising a plurality of image regions (49) arranged in matrix form, where to each image region (49) a vertical shift value of the image region (49) under consideration is assigned, **characterized in that** said data processing device (14) is adapted to extract contributions from a pitch angle error and/or a roll angle error from said vertical shift map (48) by calculation, to calculate a residual shift map (30) from said vertical shift map (48) by subtracting contributions of a pitch angle error and/or a roll angle error from said vertical shift map (48), and to calculate said vertical mismatch from said residual shift map (30).

2. The vision system as claimed in claim 1, **characterized in that** said vertical shift information comprises a plurality of match related scores indicating the degree of vertical match between the image element (43) under consideration and a plurality of image elements (44) of the corresponding image from the other imaging device shifted with different vertical components relative to the image element (43) under consideration, yielding a vertical matching cost cube (52).

3. The vision system as claimed in claim 2, **characterized in that** pluralities of image elements are bundled into larger image regions (49) and for each vertical shift the match related scores from each image element **in that** image region (49) are accumulated, yielding a reduced size matching cost cube (50).

4. The vision system as claimed in claim 3, **characterized in that** the vertical shift giving the best match for each image region (49) is determined from said reduced cost cube (50), yielding said vertical shift map (48).

5. The vision system as claimed in any one of the preceding claims, **characterized in that** said vertical shift information comprises a vector from each image element (43) under consideration to the best matching image element (44') in the corresponding rectified image from the other imaging device.

6. The vision system as claimed in claim 5, **characterized in that** said vertical shift map (48) is derived from the vertical components of said vectors.

7. The vision system as claimed in any one of the preceding claims, **characterized in that** said search for a best-matching image element (44') is performed using a one-dimensional horizontal search engine and performing a plurality of one-dimensional horizontal searches (45-47) shifted by different amounts relative to each other in the vertical direction.

8. The vision system as claimed in any one of the preceding claims, **characterized in that** said search is performed using a two-dimensional search engine.

9. The vision system as claimed in claim 8, **characterized in that** said search is performed employing an algorithm capable of performing optical flow calculations.

10. The vision system as claimed in any one of the preceding claims, **characterized in that** said vertical mismatch is calculated from feature points detected in the images of both imaging devices (12a, 12b).

11. The vision system as claimed in any one of the preceding claims, **characterized in that** the vertical mismatch is used in later rectification and/or stereo matching processes.

12. A vision method for a motor vehicle, using a pair of imaging devices (12a, 12b) being mounted in a housing part (96) and forming a stereo imaging apparatus (11), said method comprising rectification of images captured by said stereo imaging apparatus (11), stereo matching of rectified images, and detection of an object in the surrounding of the motor vehicle from stereo matched images,
said method further comprising performing, for image elements (43) of a rectified image from one imaging device, a search for a best-matching image element (44') in the corresponding rectified image from the other imaging device, said search covering a two-dimensional search area, said search yielding said vertical shift information from which a vertical shift from the image element (43) to the best-matching image element (44') is derivable,
calculating from said vertical shift information a vertical mismatch of one or more, or between, the imaging devices (12a, 12b), wherein said vertical mismatch comes from one or more of
- a vertical windshield distortion between the imaging devices (12a, 12b);
- a tilt of the optical axis of one or more of said imaging devices (12a, 12b) with respect to the image sensor plane;
- a focal length difference or drift between the imaging devices (12a, 12b), and calculating a vertical shift map (48) comprising a plurality of image regions (49) arranged in matrix form, where to each image region (49) a vertical shift value of the image region (49) under consideration is assigned,
said method **characterized by**
extracting contributions from a pitch angle error and/or a roll angle error from said vertical shift map (48) by calculation, calculating a residual shift map (30) from said vertical shift map (48) by subtracting contributions of a pitch angle error and/or a roll angle error from said vertical shift map (48), and calculating said vertical mismatch from said residual shift map (30).

## Patentansprüche

1. Ein Sichtsystem (10) für ein Kraftfahrzeug, mit einem Paar Bildaufnahmeeinrichtungen (12a, 12b), die eine Stereo-Bildaufnahmevorrichtung (11) bilden, einem Gehäuseteil (96), an dem die Bildaufnahmeeinrichtungen (12a, 12b) angebracht sind, und einer Datenverarbeitungsvorrichtung (14), die dazu eingerichtet ist, eine Korrektur der von der Stereo-Bildaufnahmevorrichtung (11) aufgenommenen Bilder, einen Stereo-Abgleich der korrigierten Bilder und eine Erkennung eines Objekts in der Umgebung des Kraftfahrzeugs aus den stereoabgeglichenen Bildern durchzuführen, wobei die Datenverarbeitungsvorrichtung (14) dazu eingerichtet ist
für Bildelemente (43) eines korrigiertes Bildes von einer Bildaufnahmeeinrichtung eine Suche nach einem am besten übereinstimmenden Bildelement (44') in dem entsprechenden korrigierten Bild von der anderen Bildaufnahmeeinrichtung durchzuführen, wobei die Suche einen zweidimensionalen Suchbereich abdeckt, wobei die Suche die vertikale Verschiebungsinformation ergibt, aus der eine vertikale Verschiebung von dem Bildelement (43) zu dem am besten übereinstimmenden Bildelement (44') bestimmbar ist,
um aus der vertikalen Verschiebungsinformation eine vertikale Fehlanpassung von einer oder mehreren oder zwischen den Bildaufnahmeeinrichtungen (12a, 12b) zu berechnen, wobei die vertikale Fehlanpassung von einem oder mehreren der folgenden Faktoren stammt
- einer vertikalen Verzerrung der Windschutzscheibe zwischen den Bildaufnahmeeinrichtungen (12a, 12b);
- einer Neigung der optischen Achse von einer oder mehreren der Bildaufnahmeeinrichtungen (12a, 12b) in Bezug auf die Bildsensorebene;
- eine Brennweitendifferenz oder -drift zwischen den Bildaufnahmeeinrichtungen (12a, 12b), und
zum Berechnen einer vertikalen Verschiebungskarte (48), die eine Vielzahl von Bildbereichen (49) umfasst, die in Matrixform angeordnet sind, wobei jedem Bildbereich (49) ein Vertikalverschiebungswert des betrachteten Bildbereichs (49) zugeordnet wird,
**dadurch gekennzeichnet, dass** die Datenverarbeitungseinrichtung (14) dazu eingerichtet ist, Beiträge eines Nickwinkelfehlers und/oder eines Rollwinkelfehlers aus der vertikalen Verschiebungskarte (48) durch Berechnung zu extrahieren,
aus der vertikalen Verschiebungskarte (48) eine Restverschiebungskarte (30) zu berechnen, indem Beiträge eines Nickwinkelfehlers und/oder eines Rollwinkelfehlers von der vertikalen Verschiebungskarte (48) subtrahiert werden, und aus der Restverschiebungskarte (30) die vertikale Fehlanpassung zu berechnen.

2. Das Sichtsystem nach Anspruch 1, **dadurch gekennzeichnet, dass** die vertikale Verschiebungsinformation eine Vielzahl von übereinstimmungsbezogenen Bewertungen umfasst, die den Grad der vertikalen Übereinstimmung zwischen dem betrachteten Bildelement (43) und einer Vielzahl von Bildelementen (44) des entsprechenden Bildes von der anderen Bildaufnahmeeinrichtung angeben, die mit unterschiedlichen vertikalen Komponenten relativ zu dem betrachteten Bildelement (43) verschoben sind, was einen vertikalen Übereinstimmungskostenwürfel (52) ergibt.

3. Das Sichtsystem nach Anspruch 2, **dadurch gekennzeichnet, dass** eine Vielzahl von Bildelementen zu größeren Bildbereichen (49) gebündelt wird und für jede vertikale Verschiebung die übereinstimmungsbezogenen Bewertungen von jedem Bildelement in diesem Bildbereich (49) akkumuliert werden, was einen größenreduzierten Übereinstimmungskostenwürfel (50) ergibt.

4. Das Sichtsystem nach Anspruch 3, **dadurch gekennzeichnet, dass** die vertikale Verschiebung, die die beste Übereinstimmung für jeden Bildbereich (49) ergibt, aus dem reduzierten Kostenwürfel (50) bestimmt wird, was die vertikale Verschiebungskarte (48) ergibt.

5. Das Sichtsystem nach einem der vorhergehenden Ansprüche, **dadurch gekennzeichnet, dass** die vertikale Verschiebungsinformation einen Vektor von jedem betrachteten Bildelement (43) zu dem am besten übereinstimmenden Bildelement (44') in dem entsprechenden korrigierten Bild der anderen Bildaufnahmeeinrichtung umfasst.

6. Das Sichtsystem nach Anspruch 5, **dadurch gekennzeichnet, dass** die vertikale Verschiebungskarte (48) aus den vertikalen Komponenten der Vektoren bestimmt wird.

7. Das Sichtsystem nach einem der vorhergehenden Ansprüche, **dadurch gekennzeichnet, dass** die Suche nach einem am besten übereinstimmenden Bildelement (44') unter Verwendung einer eindimensionalen horizontalen Suchmaschine durchgeführt wird und eine Vielzahl von eindimensionalen horizontalen Suchvorgängen (45-47) durchgeführt wird, die um unterschiedliche Beträge relativ zueinander in vertikaler Richtung verschoben sind.

8. Das Sichtsystem nach einem der vorhergehenden Ansprüche, **dadurch gekennzeichnet, dass** die Suche unter Verwendung einer zweidimensionalen Suchmaschine durchgeführt wird.

9. Das Sichtsystem nach Anspruch 8, **dadurch gekennzeichnet, dass** die Suche unter Verwendung eines Algorithmus durchgeführt wird, der in der Lage ist, optische Flussberechnungen durchzuführen.

10. Das Sichtsystem nach einem der vorhergehenden Ansprüche, **dadurch gekennzeichnet, dass** die vertikale Fehlanpassung aus Merkmalspunkten berechnet wird, die in den Bildern beider Bildaufnahmeeinrichtungen (12a, 12b) erfasst werden.

11. Das Sichtsystem nach einem der vorhergehenden Ansprüche, **dadurch gekennzeichnet, dass** die vertikale Fehlanpassung in späteren Korrektur- und/oder Stereoabgleichsprozessen verwendet wird.

12. Ein Sichtverfahren für ein Kraftfahrzeug unter Verwendung eines Paares von Bildaufnahmeeinrichtungen (12a, 12b), die in einem Gehäuseteil (96) angebracht sind und eine Stereo-Bildaufnahmevorrichtung (11) bilden, wobei das Verfahren die Korrektur von durch die Stereo-Bildaufnahmevorrichtung (11) aufgenommenen Bildern, den Stereoabgleich der korrigierten Bilder und die Erkennung eines Objekts in der Umgebung des Kraftfahrzeugs aus den stereoabgeglichenen Bildern umfasst,
wobei das Verfahren ferner umfasst
Durchführen, für Bildelemente (43) eines korrigierten Bildes von einer Bildaufnahmeeinrichtung, einer Suche nach einem am besten übereinstimmenden Bildelement (44') in dem entsprechenden korrigierten Bild von der anderen Bildaufnahmeeinrichtung, wobei die Suche einen zweidimensionalen Suchbereich abdeckt, wobei die Suche die vertikale Verschiebungsinformation ergibt, aus der eine vertikale Verschiebung von dem Bildelement (43) zu dem am besten übereinstimmenden Bildelement (44') bestimmbar ist,
Berechnen einer vertikalen Fehlanpassung einer oder mehrerer oder zwischen den Bildaufnahmeeinrichtungen (12a, 12b) aus der vertikalen Verschiebungsinformation, wobei die vertikale Fehlanpassung aus einem oder mehreren der folgenden Punkte stammt
- einer vertikalen Verzerrung der Windschutzscheibe zwischen den Bildaufnahmeeinrichtungen (12a, 12b);
- einer Neigung der optischen Achse von einer oder mehreren der Bildaufnahmeeinrichtungen (12a, 12b) in Bezug auf die Bildsensorebene;
- eine Brennweitendifferenz oder -drift zwischen den Bildaufnahmevorrichtungen (12a, 12b), und
Berechnen einer vertikalen Verschiebungskarte (48), die eine Vielzahl von Bildbereichen (49) umfasst, die in Matrixform angeordnet sind, wobei jedem Bildbereich (49) ein vertikaler Verschiebungswert des betrachteten Bildbereichs (49) zugeordnet wird,
wobei das Verfahren **gekennzeichnet ist durch** Extrahieren von Beiträgen eines Nickwinkelfehlers und/oder eines Rollwinkelfehlers aus der vertikalen Verschiebungskarte (48) durch Berechnung, Berechnen einer Restverschiebungskarte (30) aus der vertikalen Verschiebungskarte (48) durch Subtraktion von Beiträgen eines Nickwinkelfehlers und/oder eines Rollwinkelfehlers von der vertikalen Verschiebungskarte (48), und Berechnen der vertikalen Fehlanpassung aus der Restverschiebungskarte (30).

## Revendications

1. Un système de vision (10) pour un véhicule à moteur, comprenant une paire de dispositifs d'imagerie (12a, 12b) formant un appareil d'imagerie stéréo (11), une partie boîtier (96) sur laquelle lesdits dispositifs d'imagerie (12a, 12b) sont montés et un dispositif de traitement de données (14) adapté à effectuer une rectification d'images capturées par ledit appareil d'imagerie stéréo (11), la mise en correspondance stéréo d'images rectifiées et la détection d'un objet dans l'environnement du véhicule à moteur à partir d'images mises en correspondance stéréo,
dans lequel ledit dispositif de traitement de données (14) est adapté
à effectuer, pour des éléments d'image (43) d'une image rectifiée provenant d'un dispositif d'imagerie, une recherche d'un élément d'image correspondant le mieux (44') dans l'image rectifiée correspondante provenant de l'autre dispositif d'imagerie, ladite recherche couvrant une zone de recherche bidimensionnelle, ladite recherche produisant une information de décalage vertical de laquelle un décalage vertical entre l'élément d'image (43) et l'élément d'image correspondant le mieux (44') peut être dérivé,
à calculer, à partir de ladite information de décalage vertical, un désalignement vertical d'un ou plusieurs des dispositifs d'imagerie (12a, 12b), ou entre ceux-ci,
ledit désalignement vertical provenant d'un ou plusieurs des éléments suivants :
- une distorsion verticale du pare-brise entre les dispositifs d'imagerie (12a, 12b);
- une inclinaison de l'axe optique d'un ou plusieurs desdits dispositifs d'imagerie (12a, 12b) par rapport au plan du capteur d'image ;
- une différence ou une dérive de distance focale entre les dispositifs d'imagerie (12a, 12b), et
à calculer une carte de décalage vertical (48) comprenant une pluralité de régions d'image (49) disposées sous forme de matrice, où à chaque région d'image (49) est attribuée une valeur de décalage vertical de la région d'image (49) considérée,
**caractérisé en ce que** ledit dispositif de traitement de données (14) est adapté à extraire des contributions d'une erreur d'angle de tangage et/ou d'une erreur d'angle de roulis de ladite carte de décalage vertical (48) par calcul,
à calculer une carte de décalage résiduel (30) à partir de ladite carte de décalage vertical (48) en soustrayant les contributions d'une erreur d'angle de tangage et/ou d'une erreur d'angle de roulis de ladite carte de décalage vertical (48), et
à calculer ledit désalignement vertical à partir de ladite carte de décalage résiduel (30).

2. Le système de vision selon la revendication 1, **caractérisé en ce que** ladite information de décalage vertical comprend une pluralité de scores liés à la correspondance indiquant le degré de correspondance verticale entre l'élément d'image (43) considéré et une pluralité d'éléments d'image (44) de l'image correspondante provenant de l'autre dispositif d'imagerie décalés avec différentes composantes verticales par rapport à l'élément d'image (43) considéré, produisant un cube de coûts de correspondance verticale (52).

3. Le système de vision selon la revendication 2, **caractérisé en ce que** des pluralités d'éléments d'image sont regroupées dans des régions d'image plus grandes (49) et, pour chaque décalage vertical, les scores liés à la correspondance de chaque élément d'image dans cette région d'image (49) sont accumulés, produisant un cube de coûts de correspondance de taille réduite (50).

4. Le système de vision selon la revendication 3, **caractérisé en ce que** le décalage vertical donnant la meilleure correspondance pour chaque région d'image (49) est déterminé à partir dudit cube de coûts réduit (50), produisant ladite carte de décalage vertical (48).

5. Le système de vision selon l'une quelconque des revendications précédentes, **caractérisé en ce que** ladite information de décalage vertical comprend un vecteur allant de chaque élément d'image (43) considéré à l'élément d'image correspondant le mieux (44') dans l'image rectifiée correspondante provenant de l'autre dispositif d'imagerie.

6. Le système de vision selon la revendication 5, **caractérisé en ce que** ladite carte de décalage vertical (48) est dérivée des composantes verticales desdits vecteurs.

7. Le système de vision selon l'une quelconque des revendications précédentes, **caractérisé en ce que** ladite recherche d'un élément d'image correspondant le mieux (44') est effectuée en utilisant un moteur de recherche horizontale unidimensionnelle et en effectuant une pluralité de recherches horizontales unidimensionnelles (45-47) décalées de différentes quantités les unes par rapport aux autres dans la direction verticale.

8. Le système de vision selon l'une quelconque des revendications précédentes, **caractérisé en ce que** ladite recherche est effectuée en utilisant un moteur de recherche bidimensionnelle.

9. Le système de vision selon la revendication 8, **caractérisé en ce que** ladite recherche est effectuée en employant un algorithme capable d'effectuer des calculs de flux optique.

10. Le système de vision selon l'une quelconque des revendications précédentes, **caractérisé en ce que** ledit désalignement vertical est calculé à partir de points caractéristiques détectés dans les images des deux dispositifs d'imagerie (12a, 12b).

11. Le système de vision selon l'une quelconque des revendications précédentes, **caractérisé en ce que** le désalignement vertical est utilisé dans des processus ultérieurs de rectification et/ou de mise en correspondance stéréo.

12. Un procédé de vision pour un véhicule à moteur, utilisant une paire de dispositifs d'imagerie (12a, 12b) montés dans une partie boîtier (96) et formant un appareil d'imagerie stéréo (11), ledit procédé consistant à rectifier des images capturées par ledit appareil d'imagerie stéréo (11), mettre en correspondance stéréo des images rectifiées et détecter un objet dans l'environnement du véhicule à moteur à partir d'images mises en correspondance stéréo,
ledit procédé comprenant en outre les étapes consistant à
effectuer, pour des éléments d'image (43) d'une image rectifiée provenant d'un dispositif d'imagerie, une recherche d'un élément d'image correspondant le mieux (44') dans l'image rectifiée correspondante provenant de l'autre dispositif d'imagerie, ladite recherche couvrant une zone de recherche bidimensionnelle, ladite recherche produisant une information de décalage vertical de laquelle un décalage vertical entre l'élément d'image (43) et l'élément d'image correspondant le mieux (44') peut être dérivé,
calculer, à partir de ladite information de décalage vertical, un désalignement vertical d'un ou plusieurs des dispositifs d'imagerie (12a, 12b), ou entre ceux-ci, ledit désalignement vertical provenant d'un ou plusieurs des éléments suivants :
- une distorsion verticale du pare-brise entre les dispositifs d'imagerie (12a, 12b);
- une inclinaison de l'axe optique d'un ou plusieurs desdits dispositifs d'imagerie (12a, 12b) par rapport au plan du capteur d'image ;
- une différence ou une dérive de distance focale entre les dispositifs d'imagerie (12a, 12b), et
calculer une carte de décalage vertical (48) comprenant une pluralité de régions d'image (49) disposées sous forme de matrice, où à chaque région d'image (49) est attribuée une valeur de décalage vertical de la région d'image (49) considérée,
ledit procédé étant **caractérisé par** l'étape consistant à
extraire des contributions d'une erreur d'angle de tangage et/ou d'une erreur d'angle de roulis de ladite carte de décalage vertical (48) par calcul,
calculer une carte de décalage résiduel (30) à partir de ladite carte de décalage vertical (48) en soustrayant les contributions d'une erreur d'angle de tangage et/ou d'une erreur d'angle de roulis de ladite carte de décalage vertical (48), et
calculer ledit désalignement vertical à partir de ladite carte de décalage résiduel (30).
